# EUROPÄISCHE PATENTSCHRIFT

(11) **EP 2 452 780 B1**
(45) Veröffentlichungstag und Bekanntmachung des Hinweises auf die Patenterteilung: **07.01.2015**
(21) Anmeldenummer: 11009002.4
(22) Anmeldetag: 11.11.2011
(51) Int. Cl.: B24C 7/00, D06F 39/02, C11D 17/04, A61C 3/025, B05B 1/34

(54) **System zur Zahnreinigung**
System for cleaning teeth
Système pour nettoyer les dents

(30) Priorität: 12.11.2010 DE 102010051227; 12.11.2010 DE 102010051225; 12.11.2010 DE 102010051226; 19.03.2011 WO PCT/IB2011/000576
(43) Veröffentlichungstag der Anmeldung: 16.05.2012
(73) Patentinhaber: Dental Care Innovation GmbH, 90491 Nürnberg (DE)
(72) Erfinder: Müller, Daniel, Dr. med. dent., 39014 Burgstall (IT)
(74) Vertreter: Samson & Partner

(56) Entgegenhaltungen:
- EP-A1- 0 691 183
- EP-A1- 1 639 913
- WO-A1-88/01839
- WO-A1-2008/046580
- WO-A1-2011/070385
- CH-A- 354 895
- US-A- 4 214 871
- US-A- 4 540 365
- US-A- 4 564 005
- US-A- 4 978 297

## Beschreibung

### GEBIET DER ERFINDUNG

Die vorliegende Erfindung betrifft im Allgemeinen den Bereich der Zahnreinigung.

### HINTERGRUND DER ERFINDUNG

Mundduschen sind als Mittel zur Zahnreinigung bekannt und dienen dazu, mittels eines Flüssigkeitsstrahls Zähne, Zahnzwischenräume und Zahnfleisch zu reinigen. Dabei wird im Allgemeinen unter Druck aus einer Düse abgegebenes Wasser, Mundwasser etc. verwendet.

Auch ist es bekannt, der als Strahl einer Munddusche abzugebenden Flüssigkeit Stoffe beizufügen, die eine abrasive Wirkung auf der Zahnoberfläche haben, wenn sie dort auftreffen.

Aus dem Stand der Technik bekannten Mundduschen sind oftmals aufwändig herzustellen sowie kompliziert zu handhaben und zu reinigen.

WO 2008/046580 A1 offenbart eine Munddusche mit einer Einrichtung zum Zumischen von Zusatzstoffen zum Wasser. Dazu ist in einer Mischkammer ein Substratshalter zur Aufnahme einer wasserlöslichen Tablette oder Paste angeordnet, der von einem Topf gebildet ist.. Die offene Seite des Topfes ist in Richtung einer Düse der Munddusche ausgerichtet, da die Tablette bzw. Paste nicht unmittelbar von dem vorbeifließenden Wasser umspült wird und sie von dem Spülwasser erst nach einer Umlenkung erreicht werden kann.

US 4,214,871 A sieht ein Verfahren und eine Vorrichtung zum Reinigen von Zähnen und Entfernen von Plaque vor. Dabei ist an ein Düsenelement und einer Fluidleitung ein Substrathalter seitlich aufgesetzt, in dem sich eine von einem Substratbehälter zur Oberseite durchgehende Ausnehmung befindet. Das Substrat ist nicht elastisch vorgespannt gehalten

CH 354 895 betrifft eine Vorrichtung zum Bearbeiten der Zähne im Mund. Dabei wird in ein flüssiges Medium Schleifmaterial zugeführt und eine Düse in Schwingungen versetzt.

US 4,540,365 A betrifft ein Zahnreinigungssystem mit einer Düse, bei dem eine Fluidzuleitung Fluid in eine Zahnreinigungsmischung, die lose in einem Behälter vorgesehen ist, zurührt und dabei die Zahnreinigungsmischung verwirbelt und schließlich einem Flüssigkeitsstrom in einer Mischkammer beimischt.

EP 1 639 913 A1 und WO 88/01839 offenbaren jeweils eine Zahnbürste, genauer einen Zahnbürstenkopf, in der ein Zahnreinigungsmittel in einem unterhalb der Borsten angeordneten Hohlraum einsetzbar ist. Insbesondere offenbart EP 1 639 913 A1 eine elastische Halterung für das Zahnreinigungsmittel.

### AUFGABE DER ERFINDUNG

Aufgabe der vorliegenden Erfindung ist es, Lösungen bereitzustellen, die Nachteile bekannter Mundduschen zumindest verringern.

### KURZE BESCHREIBUNG DER ERFINDUNG

Zur Lösung der Aufgabe stellt die Erfindung ein Zahnreinigungssystem, gemäß Anspruch 1 bereit.

Weitere bevorzugte Ausführungsformen sind in den abhängigen Ansprüchen, der nachfolgenden Beschreibung sowie den beigefügten Zeichnungen wiedergegeben.

### KURZE BESCHREIBUNG DER ZEICHNUNGEN

Unter Bezugnahme auf die beigefügten, schematischen Zeichnungen sind im Folgenden Ausführungsformen der Erfindung beispielhaft näher erläutert. Die Zeichnungen zeigen:
- Fig. 1a - d: schematische Darstellungen verschiedener Ausführungsformen eines Zahnreinigungssystems;
- Fig. 2: eine schematische Darstellung einer Ausführungsform einer Zahnreinigungsmischung in Tablettenform;
- Fig. 3: eine schematische Darstellung einer Ausführungsform einer Aufnahmestruktur für eine Zahnreinigungsmischung;
- Fig. 4: eine perspektivische Explosionsdarstellung einer Ausführungsform einer Ausspülvorrichtung;
- Fig. 5: eine perspektivische Ansicht einer weiteren Ausführungsform einer Ausspülvorrichtung welche nicht Teil der Erfindung ist;
- Fig. 6: eine perspektivische Explosionsdarstellung einer weiteren Ausführungsform einer Ausspülvorrichtung;
- Fig. 7: eine perspektivische Explosionsdarstellung einer weiteren Ausführungsform einer Ausspülvorrichtung;
- Fig.8: eine Querschnittsansicht einer Ausführungsform einer Düse;
- Fig. 9: eine Querschnittsansicht einer weiteren Ausführungsform einer Düse; und
- Fig. 10: eine Querschnittsansicht einer weiteren Ausführungsform einer Düse.

### DETAILLIERTE BESCHREIBUNG DER ZEICHNUNGEN

Tablettierte Zahnreinigungsmischungen sind im Vergleich zu pulverförmigen einfach zu dosieren und hand zu haben. Auf Grund ihrer kompakten Struktur sind sie einfach zu lagern und zu transportieren. Zur Tablettenherstellung werden pulverförmige Bestandteile gemischt und verpresst.

Magnesiumoxyd (MgO) sowie quervernetztem Polyvinylpyrrolidon (PVP) als abrasive Bestandteile können in der Zahnreinigungsmischung, verwendet werden. Diese abrasiven Bestandteile haben vergleichbare Eigenschaften wie Zahnschmelz, weshalb sie das Risiko einer Zahnschädigung verringern können. Biofilme und Ablagerungen an Zähnen lassen sich damit weitgehend und schonend täglich abtragen. Ferner unterstützen diese abrasiven Bestandteile eine gleichmäßige Ausspülung der Zahnreinigungsmischung in einem Flüssigkeitsstrom. Bei bekannten Zahnreinigungsmischungen verwendete, nicht zur Zahnreinigung dienende Bestandteile, die eine Ausspülung der Zahnreinigungsmischung fördern, lassen sich wenigstens reduzieren. Unter Ausspülen wird hier und im Folgenden insbesondere ein Herauslösen der abrasiven Bestandteile aus der Zahnreinigungsmischung mittels Flüssigkeit verstanden.

Magnesiumoxid ist z. B. in der Europäischen Gemeinschaft als Lebensmittelzusatzstoff zugelassen und eignet sich zur Zahnpflege.

Quervernetztes PVP (Polyvinylpyrrolidon) ist ein hygroskopisches amorphes wasserlösliches Pulver. Es ist für Menschen unbedenklich und unterstützt auf Grund seiner Quellfähigkeit das Ausspülen, aber wirkt auch als abrasives Strahlmittel.

Auf Grund der Zusammensetzung löst sich eine Tablette im Wasser kaum auf. Zum Ausspülen der Bestandteile ist ein Flüssigkeitsstrom erforderlich. Daher kann auch eine Tablette nach Pausenzeiten weiterverwendet werden und bei nicht Verwendung in einem Zahnreinigungssystem verbleiben.

Für eine gleichmäßige Abgabemenge der Abrasivstoffe kann auf der Außenschicht ein höherer Anteil von MgO als in der Kernschicht verwendet werden. In der Außenschicht kann das MgO in Kontakt mit einem zum Ausspülen vorgesehen Flüssigkeitsstrom treten, weshalb bei Wasserkontakt die Tablettenstruktur aufbrechende Stoffe wenigstens reduziert werden können.

Bei der Zahnreinigungsmischung kann die Zusammensetzung der Kernschicht 40% MgO und 50% PVP umfassen.

Bei der Zahnreinigungsmischung kann die Zusammensetzung der Kernschicht 40% ±1 MgO und 50% ± 1 PVP umfassen.

Bei der Zahnreinigungsmischung kann die Zusammensetzung der Kernschicht 40% ±2 MgO und 50% ±2 PVP umfassen.

Bei der Zahnreinigungsmischung kann die Zusammensetzung der Kernschicht 40% ±3 MgO und 50% ±3 PVP umfassen.

Bei der Zahnreinigungsmischung kann die Zusammensetzung der Kernschicht 40% ±4 MgO und 50% ± 4 PVP umfassen.

Bei der Zahnreinigungsmischung kann die Zusammensetzung der Kernschicht 40% ±5 MgO und 50% ± 5 PVP umfassen.

Bei der Zahnreinigungsmischung kann die Zusammensetzung der Kernschicht 40% ±6 MgO und 50% ± 6 PVP umfassen.

Bei der Zahnreinigungsmischung kann die Zusammensetzung der Kernschicht 40% ±7 MgO und 50% ± 7 PVP umfassen.

Bei der Zahnreinigungsmischung kann die Zusammensetzung der Kernschicht 40% ±8 MgO und 50% ± 8 PVP umfassen.

Bei der Zahnreinigungsmischung kann die Zusammensetzung der Kernschicht 40% ±9 MgO und 50% ±9 PVP umfassen.

Bei der Zahnreinigungsmischung kann die Zusammensetzung der Kernschicht 40% ±10 MgO und 50% ± 10 PVP umfassen.

Bei der Zahnreinigungsmischung kann die Zusammensetzung der Außenschicht 60% MgO und 30% PVP umfassen.

Bei der Zahnreinigungsmischung kann die Zusammensetzung der Außenschicht 60% ±1 MgO und 30% ± 1 PVP umfassen.

Bei der Zahnreinigungsmischung kann die Zusammensetzung der Außenschicht 60% ±2 MgO und 30% ±2 PVP umfassen.

Bei der Zahnreinigungsmischung kann die Zusammensetzung der Außenschicht 60% ±3 MgO und 30% ±3 PVP umfassen.

Bei der Zahnreinigungsmischung kann die Zusammensetzung der Außenschicht 60% ±4 MgO und 30% ± 4 PVP umfassen.

Bei der Zahnreinigungsmischung kann die Zusammensetzung der Außenschicht 60% ±5 MgO und 30% ± 5 PVP umfassen.

Bei der Zahnreinigungsmischung kann die Zusammensetzung der Außenschicht 60% ±6 MgO und 30% ± 6 PVP umfassen.

Bei der Zahnreinigungsmischung kann die Zusammensetzung der Außenschicht 60% ±7 MgO und 30% ± 7 PVP umfassen.

Bei der Zahnreinigungsmischung kann die Zusammensetzung der Außenschicht 60% ±8 MgO und 30% ±8 PVP umfassen.

Bei der Zahnreinigungsmischung kann die Zusammensetzung der Außenschicht 60% ±9 MgO und 30% ± 9 PVP umfassen.

Bei der Zahnreinigungsmischung kann die Zusammensetzung der Außenschicht 60% ±10 MgO und 30% ± 10 PVP umfassen.

Bei der Zahnreinigungsmischung kann zwischen der Kernschicht und der Außenschicht wenigsten eine Zwischenschicht ausgebildet sein.

Bei der Zahnreinigungsmischung kann die Zusammensetzung der Zwischenschicht 50% MgO und 40% PVP umfassen.

Bei der Zahnreinigungsmischung kann die Zusammensetzung der Zwischenschicht 50% ±1 MgO und 40% ± 1 PVP umfassen.

Bei der Zahnreinigungsmischung kann die Zusammensetzung der Zwischenschicht 50% ±2 MgO und 40% ±2 PVP umfassen.

Bei der Zahnreinigungsmischung kann die Zusammensetzung der Zwischenschicht 50% ±3 MgO und 40% ±3 PVP umfassen.

Bei der Zahnreinigungsmischung kann die Zusammensetzung der Zwischenschicht 50% ±4 MgO und 40% ± 4 PVP umfassen.

Bei der Zahnreinigungsmischung kann die Zusammensetzung der Zwischenschicht 50% ±5 MgO und 40% ± 5 PVP umfassen.

Bei der Zahnreinigungsmischung kann die Zusammensetzung der Zwischenschicht 50% ±6 MgO und 40% ± 6 PVP umfassen.

Bei der Zahnreinigungsmischung kann die Zusammensetzung der Zwischenschicht 50% ±7 MgO und 40% ± 7 PVP umfassen.

Bei der Zahnreinigungsmischung kann die Zusammensetzung der Zwischenschicht 50% ±8 MgO und 40% ± 8 PVP umfassen.

Bei der Zahnreinigungsmischung kann die Zusammensetzung der Zwischenschicht 50% ±9 MgO und 40% ± 9 PVP umfassen.

Bei der Zahnreinigungsmischung kann die Zusammensetzung der Zwischenschicht 50% ±10 MgO und 40% ± 10 PVP umfassen.

Die Verteilung der Bestandteile kann sich diskret von der Außenschicht 60% MgO zur Kernschicht mit 30% PVP verändern.

Die in den Schichten jeweils restlichen Bestandteile können Binde- und/oder Formmittel umfassen, wie z.B. Magnesium-Stearat und/oder Zusatzstoffe (z. b. Duft- und/oder Aromastoffe, zahnmedizinisch wirksame Substanz).

Die Kernschicht kann etwa 40% MgO und etwa 50% PVP enthalten, was dort zu einer schnelleren Ausspülung einer im Wesentlichen auf die Kernschicht reduziere Tablette mit einem - bezogen auf die abtragende Flüssigkeitsmenge - gleichmäßigem Anteil abrasiver Bestandteile führt.

Bei der Zahnreinigungsmischung kann die Zusammensetzung der jeweiligen Schicht zur Verbesserung von Gleiteigenschaften hydrophobe Anteile, insbesondere 1% hochdisperse Kieselsäure, umfassen.

Bei der Zahnreinigungsmischung können auch weitere medizinische, kosmetische oder olfaktorische Bestandteile zugesetzt sein.

Die Aufnahmestruktur kann aus einem Gewebe oder einer Maschen-, Netz- oder Gitterstruktur hergestellt sein. Vorgesehene Materialien dafür umfassen z.B. Metall (z. B. Draht), Kunststoff (z. B. in Faden- oder Faserform; z. B. Nylon, Thermoplast, Bio-Kunststoff) und Mischung derselben. Ein die Aufnahmestruktur umströmender Flüssigkeitsstrom, etwa Wasser, ermöglicht eine Ausspülung der abrasiven Bestandteile einer von der Aufnahmestruktur gehaltenen Zahnreinigungsmischung.

Die Einlass- und Auslassöffnungen können so angeordnet und/oder ausgebildet sein, dass ein durch die Einlassöffnung(en) einströmender Flüssigkeitsstrom die Zahnreinigungsmischung im Wesentlichen vollständig umströmt. Ferner können sie angeordnet und/oder ausgebildet sein, dass ein Flüssigkeitsstrom zunächst vorbestimmte Bereiche einer Zahnreinigungsmischung kontaktiert (z. B. Kante(n), Ränder, Seitenfläche(n)).

Die Auslassöffnung(en) können Flüssigkeit mit ausgelösten abrasiven Bestandteilen passieren lassen. Ferner kann/können sie einen homogenen Flüssigkeitsstrom mit ausgespülten Bestandteilen ermöglichen.

Die Auslassöffnung(en) kann/können so dimensioniert sein, dass Partikelansammlungen oder Partikel vorbestimmter Größe und darüber in der Aufnahmestruktur zurückgehalten werden. Verstopfungen von stromabwärts liegenden Leitungen, Düsen, etc. lassen sich so vermeiden.

Rückstände können im Flüssigkeitsstrom erneut zerkleinert und ausgespült werden oder mit der Aufnahmestruktur entsorgt werden.

Ferner kann die Aufnahmestruktur aus zwei Teilelementen zusammensetzbar sein.

Dabei kann die Aufnahmestruktur scheibenartig ausgebildet sein, z. B. so dass eine Zahnreinigungsmischung im Wesentlichen in einem rechten Winkel zu einem Flüssigkeitsstrom ohne sich zu drehen ausgerichtet sein kann.

Bei der Aufnahmestruktur können die Teilelemente über Verbindungsbereiche miteinander zu einem Verbindungsabschnitt verbindbar sein. Zur Verbindung sind geeignete Maßnahmen wie Verschweißen, Verschmelzen etc. möglich. Der Verbindungsabschnitt kann zum Halten der Aufnahmestruktur z. B. in einer Ausspülvorrichtung ausgelegt sein.

Die Zahnreinigungsmischung kann von der Innenfläche der Aufnahmestruktur wenigstens teilweise beabstandet sein. Ein Zwischenraum bzw. Abstand zwischen der Zahnreinigungsmischung und der Aufnahmestruktur kann das Ausspülen der Tablettenbestandteile unterstützen, z. B. wenn Bewegung der Zahnreinigungsmischung einen mechanischen Abrieb bewirkt. Zusätzlich kann so eine im Wesentlichen allseitige Umspülung gewährleistet werden. Der Abstand kann bei annähernd 1/10 bis 1/20 des Durchmessers der Zahnreinigungsmischung liegen.

Bei der Aufnahmestruktur können die Ein- und Auslassöffnungen ausgelegt sein, um einen homogenen Flüssigkeitsstrom mit aus der Zahnreinigungsmischung ausgespülten Bestandteilen zu ermöglichen.

Die Aufnahmestruktur kann scheibenartig ausgebildet sein. So kann z. B. eine flache Tablettenform einem Flüssigkeitsstrom ausgesetzt werden, ohne sich zu drehen.

Die Aufnahmestruktur kann auch andere Geometrien aufweisen, die z.B. an eine Tablettenform oder eine andere Ausgestaltung der Zahnreinigungsmischung angepasst sind. Beispielsweise kann die Aufnahmestruktur pyramiden-, quader- oder polyederförmig ausgebildet sein.

Bei der Ausspülvorrichtung kann der Flüssigkeitsstrom die Zahnreinigungsmischung von allen Seiten umspülen und beaufschlagen. Der Flüssigkeitsstrom kann dabei die Zahnreinigungsmischung in Vibration und Bewegung versetzen. Die Zahnreinigungsmischung wird dabei über Wechselwirkung mit dem Flüssigkeitsstrom selbst ausgespült. Ferner können durch Wechselwirkung mit einer oder mehreren strukturellen Komponenten (z. B. ein oder mehrere Halte-Elemente) zusätzlich abrasive Bestandteile herausgelöst werden. Als strukturelle Komponente kann z. B. eine Aufnahmestruktur oder die Ausspülvorrichtung selbst dienen.

Die wenigstens teilweise elastische Ausgestaltung der Ausspülvorrichtung bewirkt, dass die Zahnreinigungsmischung auch bei abnehmenden Volumen in einer idealen Ausspülposition ("sweet spot") gehalten wird. Dabei kann der Masseschwerpunkt der Zahnreinigungsmischung relativ zum Flüssigkeitsstrom ausgerichtet sein und z. B. zentriert im Flüssigkeitsstrom gehalten werden.

Bei der Ausspülvorrichtung kann die Haltevorrichtung wenigstens zwei elastische Finger umfassen, die die Zahnreinigungsmischung elastisch vorgespannt zu halten vermögen.

Die Finger können als wenigstens zwei elastische Kunststoff-Halter ausgebildet sein, auf denen eine Zahnreinigungsmischung aufliegt. Dabei kann die Zahnreinigungsmischung in einer obigen Aufnahmestruktur angeordnet sein.

Die Ausspülvorrichtung kann eine Siebstruktur aufweisen. Die (z. B. durch Finger- und/oder Aufnahmestruktur erzeugte) Vorspannkraft kann die Zahnreinigungsmischung gegen die Siebstruktur drängen. Die Siebstruktur kann an einem Auslass der Ausspülkammer angeordnet sein.

Die elastische Vorspannkraft hält die Zahnreinigungsmischung auch bei abnehmendem Volumen positioniert (z. B. durch Druck in Richtung auf die Siebstruktur).

Dadurch kann im Wesentlichen die gesamte Oberfläche einer Zahnreinigungsmischung umlaufend umspült und diese ausgespült werden. Dies fördert einen stetigen, gleichmäßigen und z. B. bei einer definierten Flüssigkeitsmenge vollständigen Abtrag bzw. Ausspülung der Bestandteile der Zahnreinigungsmischung.

Die elastische Vorspannkraft erlaubt es ferner, dass sich die Zahnreinigungsmischung im Flüssigkeitsstrom bewegen kann. Im Fall von Fingern kann z. B. über eine Flüssigkeitsumströmung und ggf. zusätzlich über die Ausgasung/Aufquellung des Sprengmittels PVP die Zahnreinigungsmischung sich auf den Fingern und mit diesen bewegen.

Die Anordnung des Flüssigkeitseinlasses und/oder des Flüssigkeitsauslasses beeinflusst den Flüssigkeitsstrom in der Ausspülvorrichtung. So kann z. B. ein die Ausspülvorrichtung im Wesentlichen linear durchdringender oder ein verwirbelter Flüssigkeitsstrom erzeugt werden.

Bei der Ausspülvorrichtung kann der Druck von einströmender Flüssigkeit zwischen 4 bar und 10 bar betragen.

Die Ausspülvorrichtung kann ein Verwirbelungselement zur Verwirbelung von in die Ausspülvorrichtung eingeleiteter Flüssigkeit umfassen.

Das Verwirbelungselement versetzt einen zulaufenden Flüssigkeitsstrom in der Ausspülkammer in Turbulenz bzw. in eine verwirbelte drehende Bewegung. Die Anordnung des Flüssigkeitseinlasses und/oder des Flüssigkeitsauslasses kann die Wirkung des Verwirbelungselements unterstützen. Das Verwirbelungselement kann zylinderförmig ausgestaltet sein und Flüssigkeit beispielsweise über Schrägbohrungen in eine Wirbelkammer einleiten. Das Verwirbelungselement kann baueinheitlich mit der Haltevorrichtung integriert sein. Hierfür ist z. B. möglich, in der Haltevorrichtung einen oder mehrere Durchlässe oder Kanäle auszubilden, die (ggf. durch entsprechende Anströmung) für eine Verwirbelung sorgen.

Die Geometrie der Ausspülvorrichtung, insbesondere der Auspülkammer kann so ausgelegt sein, dass die Tablette stets allseitig umspült wird und kontinuierlich Substrat ausgespült wird, auch wenn sie sich das Tablettenvolumen durch den Abtrag der Außenschichten verkleinert. Der Durchmesser der Ausspülkammer kann dabei etwas größer als die Tablette sein, so dass sie bequem eingebracht und an der Innenwand geführt werden kann. Die Länge der Wirbelkammer kann so bemessen, dass das Volumen möglichst klein bleibt um die Druckverhältnisse im gesamten System möglichst gleich zu halten.

Die Ausspülvorrichtung ist zum Ausspülen einer Zahnreinigungsmischung bei einem Zahnreinigungssystem vorgesehen.

Auch kann die Ausspülvorrichtung ein Oberteil und ein Unterteil umfassen, die miteinander gekoppelt sind. Dazu kann beispielsweise ein Schnapp- oder Rastverschluss oder Drehverschluss oder ein sonstiger geeigneter Mechanismus verwendet werden.

Für eine Düse können halbstarre Kunststoffe, wie Polymethylmethacrylat (PMMA) oder hart-Polyvinylchlorid (PVC) als teilweise flexibles Material verwendet werden. Solche Materialien sind kostengünstig und leicht auswechselbar. Das teilweise flexible Material verhindert Verstopfungen durch abrasive Partikel, indem es, insbesondere im mikroskopischen Maßstab, derart verformbar ist, dass eine Eigenvibration der Düse beim Durchtritt der Flüssigkeitssuspension möglich ist. Kombiniert mit eventuellen periodischen Unregelmäßigkeiten des Drucks dieses zugeführten Flüssigkeitsstroms über Resonanzen können Anlagerungen von Suspensionsbestandteilen vermindert und kurzfristige Anlagerungen wieder abgelöst werden. Auch kann der Verschleiß der Düse verringern und eine ausreichende Festigkeit für Eingangsdrücke von 4 bar - 10 bar sichergestellt werden.

Ferner kann sich das Drallmittel konisch verengen und/oder spiralförmig oder zylinderförmig ausgestaltet sein. Das Drallmittel verdrallt durch die Düse strömende Flüssigkeit und kann diese in den Verdichtungsbereich drängen. Das Drallmittel kann eine Verdrallung bewirken, die (unmittelbar) vor der Verdichtungszone einsetzt und eine dann glatte Stromführung ermöglicht.

Auch können die Innenwände des Verdichtungsbereichs glatt, beispielsweise beschichtet, ausgebildet sein. Eine zirkulare Aufweitung der Düsenöffnung bzw. des Düsenmundes kann zwischen 30° und 60°, insbesondere 45° zur Düsenlängsachse an der Austrittsöffnung betragen.

Die Düse kann als Hohlkegeldüse ausgeführt sein.

Beim Zahnreinigungssystem kann die Zahnreinigungsmischung in einer obigen Aufnahmestruktur angeordnet sein.

Das Zahnreinigungssystem kann ein Bedienelement aufweisen, in oder an dem die Ausspülvorrichtung angeordnet sein kann.

Das Zahnreinigungssystem kann die Flüssigkeitsquelle umfassen, oder mit einer separaten Flüssigkeitsquelle verbunden sein.

Vergleichbare Elemente in den Figuren tragen dieselben Bezugszeichen.

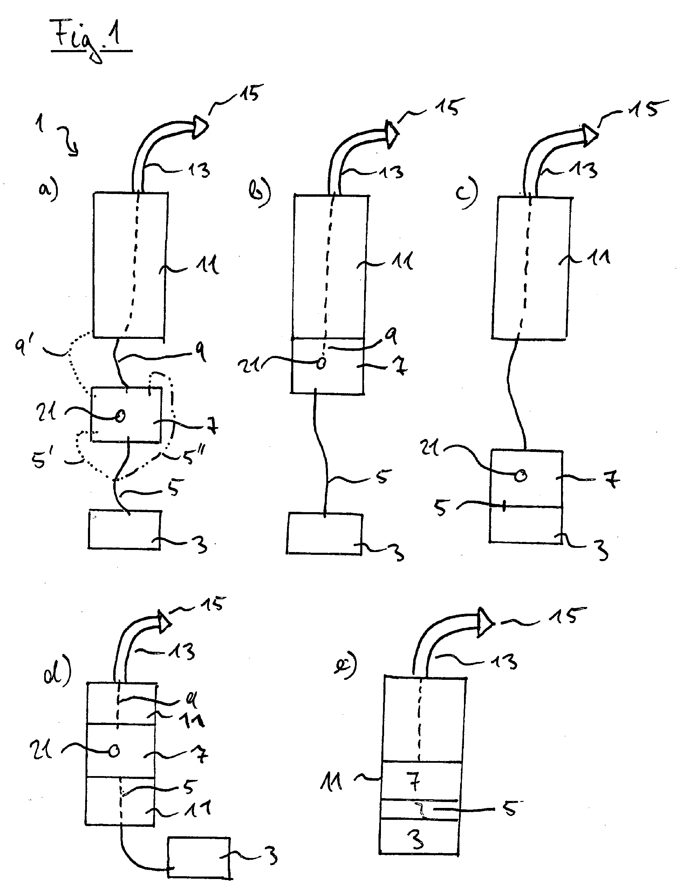

**Fig. 1a** **bis d** zeigen verschiedene Ausführungsformen eines Zahnreinigungssystems 1.

Die Zahnreinigungssysteme 1 umfassen jeweils eine Flüssigkeitsquelle 3, eine Flüssigkeitszuleitung 5, eine Ausspülvorrichtung 7, eine Flüssigkeitsableitung 9, ein Bedienelement 11 und einen Düsenaufsatz 13 mit einer Düse 15.

Die Flüssigkeitsquelle 3 kann als Wassertank mit einer darin integrierten oder damit verbunden Pumpvorrichtung ausgebildet sein; oder beispielsweise durch Verbindung mit einer Hauswasserleitung ("Wasserhahn"), wobei mit einer z. B. vor der Ausspülvorrichtung 7 angeordneten Pumpvorrichtung sich auch hier ein z. B. pulsierender Flüssigkeitsstrom erzeugen lässt. Die Pumpvorrichtung kann auch stromaufwärts der Ausspülvorrichtung 7 angeordnet sein. Von der Flüssigkeitsquelle 3 gelangt Flüssigkeit über die Flüssigkeitszuleitung 5 zu der Ausspülvorrichtung 7.

In der in Fig. 1a gezeigten Ausführungsform ist die Ausspülvorrichtung 7 zwischen Bedienelement 11 und Flüssigkeitsquelle 3 und den sich zwischen diesen erstreckenden Leitungen 5 und 9 angeordnet. Dies kann es z. B. ermöglichen, die Erfindung in ein herkömmliches Zahnreinigungssystem (Munddusche) zu integrieren, indem die Ausspülvorrichtung 3 zwischen Flüssigkeitsquelle 3 und Bedienelement 11 eingefügt wird.

In der in Fig. 1b gezeigten Ausführungsform ist die Ausspülvorrichtung 7 an das Bedienelement 11 gekoppelt. Dazu kann die Ausspülvorrichtung 7 mit einem Ende des Bedienelements verbunden (beispielsweise verklebt, verschweißt, verschraubt etc.) oder damit einstückig ausgebildet sein. Diese Variante ist z. B. für Zahnreinigungssysteme verwendbar, bei denen die Flüssigkeitsquelle 3 (ggf. mit einer dieser zugeordneten Pumpvorrichtung) als separater Tank ausgeführt ist, um ein kleines, das Bedienmittel 11 umfassendes Griffstück zu ermöglichen.

In der in Fig. 1d gezeigten Ausführungsform ist die Ausspülvorrichtung 7 innerhalb des Bedienelements 11 angeordnet. Diese Variante kann z. B. verwendet werden, wenn im darstellungsgemäß unteren Ende des Bedienelements 11 eine Pumpvorrichtung und/oder eine Energieversorgung angeordnet ist.

In der in Fig. 1c gezeigten Ausführungsform ist die Ausspülvorrichtung 7 an die Flüssigkeitsquelle 3 gekoppelt. Dazu kann die Ausspülvorrichtung 7 mit der Flüssigkeitsquelle 3 verbunden (verklebt, verschweißt, verschraubt etc.) oder damit einstückig ausgebildet sein. An einem Wasserhahn kann ein Adapter-Aufsatz zur Verbindung mit einem entsprechenden Gegenstück der Ausspülvorrichtung 7 Verwendung finden. Auch diese Variante eignet sich zur nachträglichen Nachrüstung.

Die in Fig. 1e) gezeigte Ausführungsform zeigt eine alle obigen Komponenten baueinheitlich integrierende Variante.

Bei allen Ausführungsformen der Fig. 1a bis 1e kann die Flüssigkeitszufuhr, wie in Fig. 1a gezeigt, über eine oder mehrere ergänzende oder optionale Flüssigkeitsleitung 5' und/oder 5" erfolgen. Eine solche, darstellungsgemäß seitliche Einleitung kann eine zusätzliche Verwirbelung des eingeleiteten Flüssigkeitsstroms bewirken.

In der weiter unten detailliert erläuterten Ausspülvorrichtung 7 ist bei Verwendung eine Zahnreinigungsmischung z. B. in Form eine Tablette 21 oder als Granulat angeordnet. Der eingeleitete Flüssigkeitsstrom umspült die Zahnreinigungsmischung und löst insbesondere deren abrasive Bestandteile aus. Die Flüssigkeit vermengt sich mit diesen Bestandteilen zu einer Zahnreinigungssuspension.

Bei allen Ausführungsformen der Fig. 1a bis 1e kann die Ableitung der Zahnreinigungssuspension aus der Ausspülvorrichtung 7, wie in Fig. 1a gezeigt, über wenigstens eine ergänzende oder alternative Flüssigkeitsableitung erfolgen.

Die Zahnreinigungssuspension wird aus der Ausspülvorrichtung 7 durch das Bedienelement 11 und den Düsenaufsatz 13 der Düse 15 zugeleitet. Der Düsenaufsatz 13 ist einstückig mit dem Bedienelement ausgebildet oder damit austauschbar verbunden. Über die Düse 15 tritt die Zahnreinigungssuspension aus und wird zur Zahnreinigung einem Mundraum zugeführt.

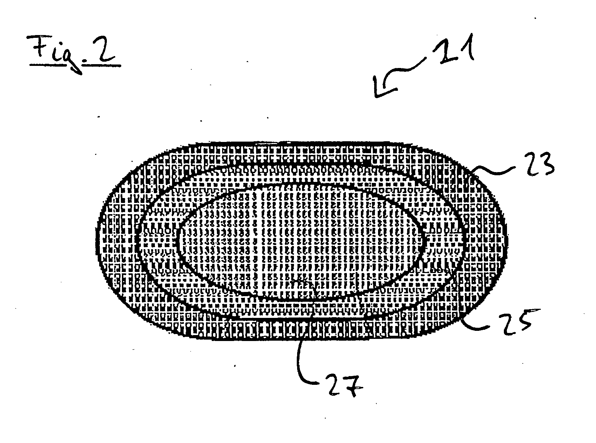

**Fig. 2** zeigt eine Zahnreinigungsmischung in Form einer Tablette 21. Die Tablette 21 umfasst abrasive Bestandteile, die in mehreren Schichten 23 und 25 sowie einer Kernschicht 27 vorhanden sind. Die Tablettenschichten 23, 25 und 27 umfassen jeweils Magnesiumoxid und quervernetztes Polyvinylpyrrolidon (PVP) als abrasive Bestandteile.

PVP wirkt auch der einer Verklumpung oder Anhäufung von Magnesiumoxidbestandteilen entgegen. PVP unterstützt ein Auflösen bzw. Aufbrechen der Struktur der Tablette 21 unter Flüssigkeitszufuhr. PVP dient, da es unter Flüssigkeitszufuhr aufquillt, dabei als eine Art "Sprengmittel" für ein "kontrolliertes" Aufbrechen der Tablettenstruktur.

Die Schichten 23 und 25 und der von diesen umhüllte Kern 27 unterscheiden sich in ihrer Zusammensetzung aus Magnesiumoxid und PVP und ggf. Binde- und Formmitteln. Als Binde- und Formmittel können Zusatzstoffe, beispielsweise Magnesium-Stearat, eingesetzt werden. Der Bindemittelanteil kann ca. 5 bis 15 % betragen. Zusätzlich können hydrophobe Bestandteile, wie beispielsweise disperse Kieselsäure eingepresst sein, die die Fließfähigkeit verbessern.

Das Verhältnis von Magnesiumoxid und PVP verändert sich von der Außenschicht 23 über die mittlere Schicht 25 zum Kern 27. So können in der Außenschicht 23 z.B. 60% Magnesium und 30% PVP verwendet werden. Der Kern 27 der Tablette 21 kann hingegen z.B. 40% Magnesiumoxyd und 50% PVP aufweisen. In der mittleren Schicht 25 kann ein Verhältnis von z.B. 50% Magnesiumoxid zu 40% PVP vorliegen. Dadurch lässt sich eine schnelle und gleichmäßige Ausspülung des Tablettenkerns 27 und somit auch eine gleichmäßige Konzentration von abrasiven Bestandteilen in der Zahnreinigungssuspension gewährleisten.

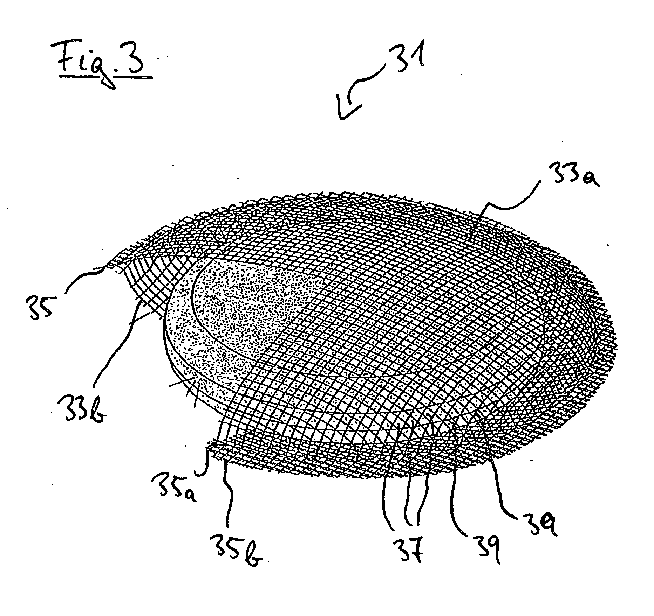

**Fig. 3** zeigt eine Aufnahmestruktur 31 zur Aufnahme einer Zahnreinigungsmischung, z.B. eine Tablette 21 oder Granulat. Die Aufnahmestruktur 31 umfasst ein Oberteil 33a und ein Unterteil 33b, die jeweils schalenartig bzw. diskusartig ausgebildet sind. Das Oberteil 33a und der Unterteil 33b sind an ihren Rändern 35a und 35b miteinander verbunden. Zur Verbindung können die Ränder 35a und 35b beispielsweise verschweißt, verpresst, verklebt und/oder mittels Rast- und/oder Schnappverbindungen miteinander gekoppelt sein. Die Aufnahmestruktur 31 kann beispielsweise aus Kunststoff, Metall, Faser-Gewebe, Glasfaser, Flies, Stoffgewebe und etc. sowie Mischungen unterschiedlicher Materialen hergestellt sein. Insbesondere ist das oder die Materialen derart gewählt, dass die Aufnahmestruktur 31 elastisch verformbar ist.

Die Aufnahmestruktur 31 ist zur Verwendung in einem Zahnreinigungssystem 1, insbesondere in einer Ausspülvorrichtung 7 ausgelegt. Die Aufnahmestruktur 31 weist Öffnungen 37 auf, durch die Flüssigkeit eintreten kann und durch die Zahnreinigungssuspension (s.o.) mit darin enthaltenen abrasiven Bestandteilen austreten kann. Die Öffnungen 37 können, wie beispielhaft in Fig. 3 veranschaulicht, im Wesentlichen gleich groß sein. Bei weiteren Ausführungsformen können die Öffnungen 37, durch die Flüssigkeit eintreten soll, kleiner als die Öffnung 37 sein, durch die Zahnreinigungssuspension austreten soll.

Bei der gezeigten Variante sind die Öffnungen 37 in den gitterförmig, maschenartig, wabenförmig oder gewebeartig ausgestalteten Ober- und Unterteilen 33a und 33b bereitgestellt. Bei weiteren Varianten können die Öffnungen 37 als Durchbrüche, Bohrungen und dergleichen vorgesehen sein.

Die Öffnungen 37 können derart bemessen sein, dass in der Suspension nur abrasive Bestandteile einer bestimmten Größe und kleiner austreten können. Auf diese Weise kann vermieden werden, dass z.B. Verklumpungen oder Ansammlungen von Zahnreinigungsmaterial austreten und/oder zu große Teichen stromabwärts positionierte Elemente verstopfen können.

In Fig. 3 ist innerhalb der Aufnahmestruktur 31 in einem Ausnahmeraum eine Tablette 21 angeordnet. Die Tablette 21 ist dabei vollständig von der Aufnahmestruktur 31 aufgenommen, wobei in der vorliegenden Zeichnung lediglich ein Teil zur Veranschaulichung herausgeschnitten dargestellt ist.

Die Tablette 21 und/oder die Aufnahmestruktur 31 sind bei der gezeigten Variante derart dimensioniert, dass die Tablette 21 in der Aufnahmestruktur 31 bewegbar ist, wodurch eine Wirkverbindung mit den Innenseiten der Aufnahmestruktur 31 auftreten kann, die zu einem mechanischen Abrieb der Tablette 21 führen kann. Ferner ermöglicht eine Bewegbarkeit der Tablette 21 in der Aufnahmestruktur 31 eine im Wesentlichen allseitige Umspülung.

Die Aufnahmestruktur 31 ermöglicht es, die Tablette 21 bezüglich des Flüssigkeitsstroms positioniert zu halten, so dass z.B. eine quer zur Strömung ausgerichtete Tablette nicht zur Stromrichtung hin ausgerichtet wird oder gedreht wird. Ferner bewirkt die Aufnahmestruktur 31 eine (zusätzliche) Verwirbelung eines zur Ausspülung der Tablette 21 vorgesehenen Flüssigkeitsstroms. Dies unterstützt die Ausspülung der Tablette 21.

Nach Verwendung, z.B. wenn die Tablette 21 ausgespült ist bzw. im Wesentlichen keine abrasiven Bestandteile mehr vorhanden sind, kann die Aufnahmestruktur 31 entnommen und entsorgt werden. Mit der Aufnahmestruktur 31 werden auch darin enthaltene Rückstände entfernt.

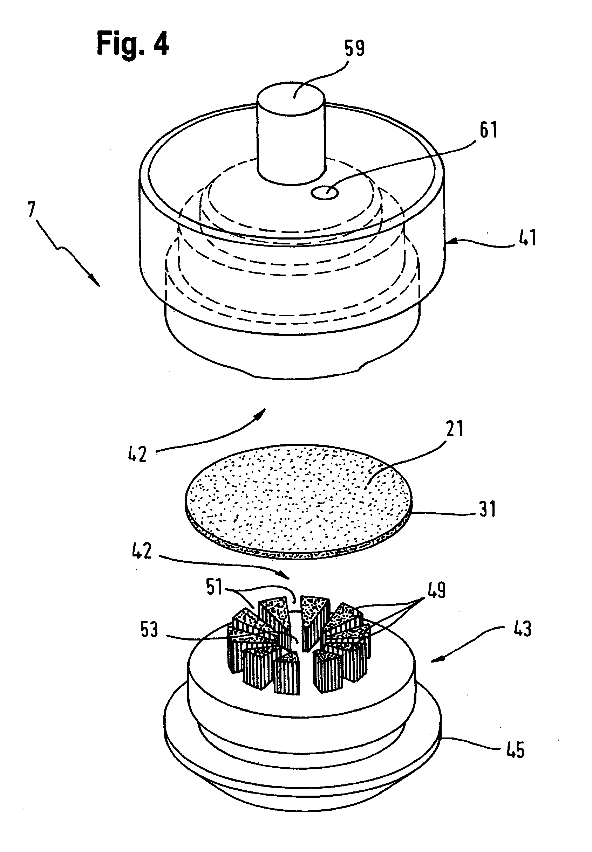

**Fig. 4** zeigt eine Ausführungsform einer Ausspülvorrichtung 7 z. B. für ein oben genanntes Zahnreinigungssystem 1.

Die Ausspülvorrichtung 7 umfasst eine Ausspülkammer 42, die bei der gezeigten Variante beispielhaft zylinderförmig ausgebildet, und zur Aufnahme einer Zahnreinigungsmischung vorgesehen ist. Fig. 4 zeigt beispielhaft eine Zahnreinigungsmischung in Form einer Tablette 21. Die Dimensionierung der Ausspülkammer 42 ist hier so, dass die Zahnreinigungsmischung allseitig umspült und ausgespült werden kann.

Die Ausspülungsvorrichtung 7 umfasst ein Oberteil 41 und ein Unterteil 43 mit einem Bodenelement 45. Auf dem Bodenelement 45 ist eine Haltevorrichtung angeordnet, die podestartige Halteaufnahmen bzw. Auflagen 49 aufweist. Die Auflagen 49 können wenigstens teilweise (z. B. in ihren darstellungsgemäß oberen Bereichen) elastisch sein. Die Auflagen 49 sind über dazwischenliegende Räume 51 und einem zentralen Raum 53 voneinander beabstandet. Die Auflagen 49 sind an ihren darstellungsgemäß oberen Seiten außen höher als innen. Dies bildet eine kegelförmige Auflage für die Zahnreinigungsmischung.

Die Halteauflagen 49 sind dazu ausgelegt, eine Zahnreinigungsmischung (z. B. in Form einer Tablette 21 oder in einer Aufnahmestruktur 31 eingeschlossen), aufzunehmen bzw. zu lagern. Die vorhandene Elastizität der Haltevorrichtung bzw. deren Auflagen 49 und die Elastizität einer Aufnahmestruktur (falls verwendet) sorgt für eine elastische Vorspannkraft, die auf Zahnreinigungsmischung zwischen der Haltevorrichtung und einem im Oberteil 41 ausgebildeten Gegenlager wirkt.

Über eine Flüssigkeitszuleitung (z. B. die Zuleitung 5) von Fig. 1 wird Flüssigkeit der Ausspül- bzw. Mischkammer 42 zugeleitet. Die Zuleitung von Flüssigkeit kann gemäß der Darstellung von unten erfolgen, um einen Flüssigkeitsstrom in vertikaler Richtung durch die Räume 51 und 53 zu erzeugen. Ergänzend oder alternativ kann Flüssigkeit (auch) so zugeführt werden (z. B. seitlich), dass sich ein Flüssigkeitsstrom ergibt, der wenigstens zum Teil radial und/oder horizontale Komponenten aufweist, und durch den kreisförmigen Querschnitt der Mischkammer in eine verwirbelte drehenden Bewegung resultiert. Diese Bewegung bleibt aufrecht erhalten, so dass die Tablette fortlaufend und gleichmäßig umspült bleibt.

Ferner ist auf dem Oberteil 41 ein Befestigungselement 59 angeordnet, das zur Verbindung mit einem Bedienelement 11 eines Zahnreinigungssystems vorgesehen ist. Das Bedienelement 11 kann beispielsweise eine das Befestigungselement 59 aufnehmende Struktur haben und mit dem Befestigungselement 59 verbunden, beispielsweise verschraubt, verschweißt oder verklebt, sein. Zusätzlich ist an dem Oberteil ein Durchlass 61 vorgesehen, durch den Flüssigkeitssuspension aus der Ausspülkammer 42 entfernt werden kann.

Zum Betrieb wird Flüssigkeit in die Ausspülkammer 42 eingeleitet, und kann dort verwirbelt, in Rotation versetzt werden. Der Flüssigkeitsstrom in der Ausspülkammer tritt in Wechselwirkung mit der Zahnreinigungsmischung, wodurch diese ausgespült wird und eine Zahnreinigungsmischungssuspension erzeugt wird. Diese wird durch den Auslass 61 entnommen und zur Zahnreinigung verwendet.

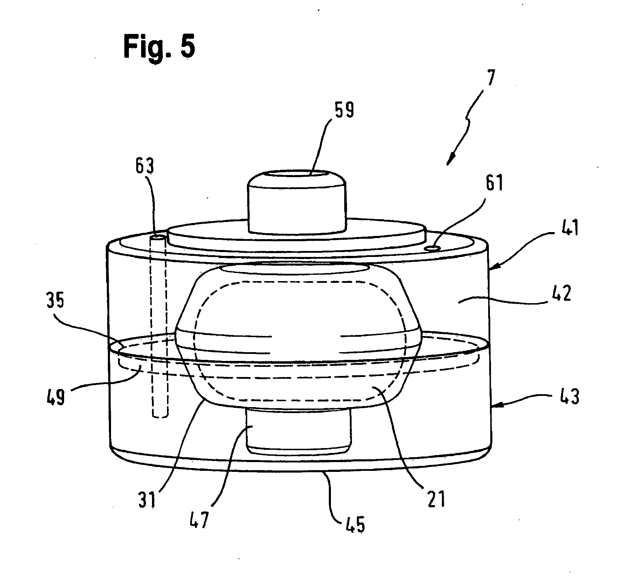

**Fig. 5** zeigt eine perspektivische Ansicht einer weiteren Ausführungsform einer Ausspülvorrichtung 7, welche nicht Teil der Erfindung ist, mit einer Ausspülkammer bzw. Mischkammer 42. Die Mischkammer 42 umfasst ein Oberteil 41 und ein Unterteil 43 mit einem Bodenelement 45. Diese können über Verbindungselemente miteinander verbunden sein, beispielsweise ein Gewinde, ein Rast- oder Schnappmechanismus. Über eine Flüssigkeitszuleitung 5 wird Flüssigkeit durch das Oberteil 41 in einen darstellungsgemäß untenliegenden Zulaufbereich im Unterteil 43 eingeleitet. Innerhalb der Ausspülkammer 42 ist eine Zahnreinigungsmischung in Form einer Tablette 21 in einer Aufnahmestruktur 31 angeordnet.

Die Aufnahmestruktur 31 wird in der Ausspülkammer 42 von einer Haltevorrichtung gehalten. Dazu liegt die Aufnahmestruktur 31 mit Ihrem Rand 35 auf einen an der Innenwand der Ausspülkammer 42 umlaufend ausgebildeten Vorsprung auf. Zusätzlich liegt die Aufnahmestruktur 31 mit ihrer Unterseite des Unterteils 33b auf einer optionalen podestartigen Stützstruktur 47 auf und wird von unten gestützt. Das Oberteil 33a der Aufnahmestruktur stützt sich ferner gegen die obere Innenfläche des Oberteils 41 ab.

Die Haltevorrichtung ggf. zusammen mit der Stützstruktur 47, sichert die Ausrichtung der Aufnahmestruktur 31 innerhalb der Ausspülkammer 42. In optionaler Ergänzung kann sich die Oberseite der Aufnahmestruktur 31 an der Innenseite des Oberteils abstützen. Die Aufnahmestruktur 31 hält elastisch vorgespannt die Zahnreinigungsmischung.

Im Oberteil 41 ist ein Auslass 61 ausgebildet, über den Flüssigkeitssuspension aus der Ausspülkammer 42 ableitbar ist.

Bei Verwendung wird Flüssigkeit über den Einlass 63 in die Ausspülkammer 42 eingeleitet, und umströmt dort die innerhalb der Aufnahmestruktur 31 eingefasste Zahnreinigungsmischung bzw. Tablette 21 und spült diese aus. Dort verwirbelt Flüssigkeit und erfährt eine Rotationskraft. Die Verwirbelung und Drehung bzw. Rotation der Flüssigkeit lässt sich durch eine entsprechend Beschichtung der Innenseite der Wirbelkammer 7, beispielsweise einer Teflonbeschichtung, verbessern. Auch können an der Innenseite entsprechend Oberflächengeometrien, beispielsweise Gewindestrukturen, Schneckenformen oder Schaufelausbildungen vorgesehen sein, die eine Verwirbelung der eingetretenen Flüssigkeit verstärken.

Ausgelöste Partikel der Zahnreinigungsmischung entsprechender Größe verlassen zusammen mit Flüssigkeit die Aufnahmestruktur 31 in die umgebende Ausspülkammer 42. Die Zahnreinigungssuspension wird über den Auslass 61 entfernt und zur Zahnreinigung verwendet.

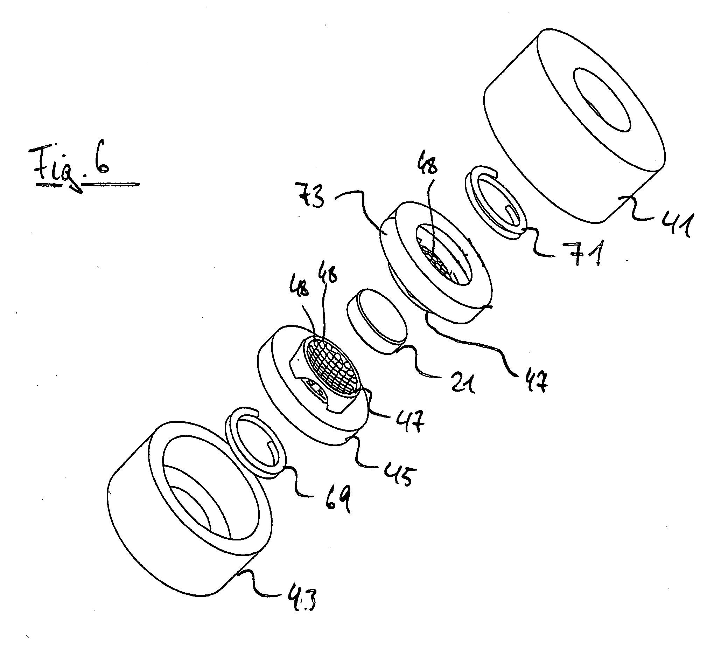

**Fig. 6** zeigt eine schematische Explosionsdarstellung einer weiteren Ausführungsform einer Ausspülvorrichtung 7. In einem Gehäuse mit einem Oberteil 41 und einem Unterteil 43 ist eine im Folgenden näher beschriebene Haltevorrichtung angeordnet. Ein Bodenelement 45 ist in dem Unterteil 43 eingesetzt und weist eine Auflage 47 zur Anordnung einer Zahnreinigungsmischung darauf auf. In der Auflage 47 sind Öffnungen bzw. Durchlässe 48 ausgebildet.

Eine Gegenauflage 73 weist Öffnungen 42 auf zum Durchlass von Flüssigkeit. Bei Verwendung wird eine Zahnreinigungsmischung zwischen der Auflage 47 und der Gegenauflage 73 angeordnet

Zwischen dem Oberteil 41 und der Gegenauflage 73 ist eine Feder 71 vorgesehen. Zwischen dem Bodenelement 45 und dem Unterteil 43 ist ebenso eine Feder 71 vorgesehen. Die Federn 69 und 71 sorgen für die elastisch vorgespannte Anordnung der Zahnreinigungsmischung.

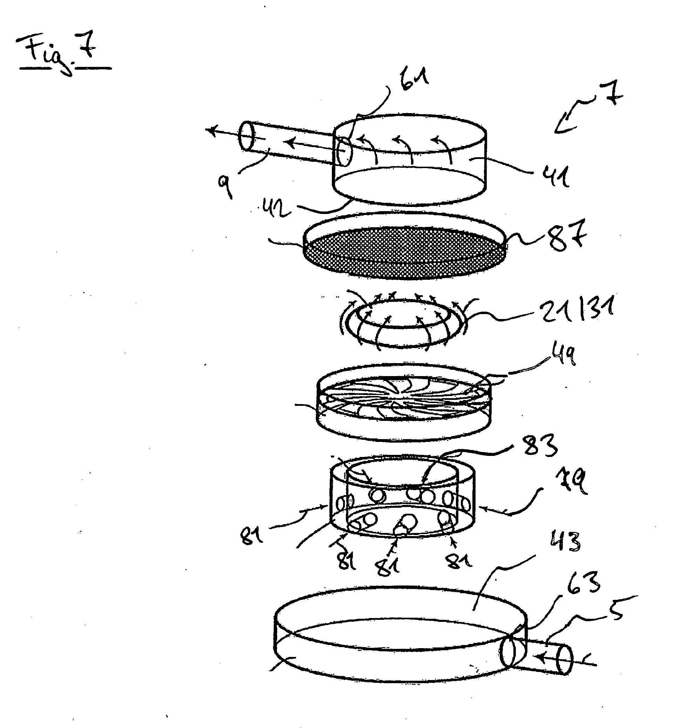

**Fig. 7** zeigt eine schematische Explosionsdarstellung einer weiteren Ausführungsform einer Ausspülvorrichtung 7 mit einem Oberteil 41 und einem Unterteil 43.

Hier ist ein Verwirbelungskörper 79 in der Ausspülkammer vorgesehen. Der Verwirbelungskörper 79 ist kreisförmig bzw. zylinderförmig ausgebildet und umfasst in seinen Seitenwänden schräge Ausnehmungen bzw. Durchgangsbohrungen 81, durch die zugeleitete Flüssigkeit in eine Wirbelkammer 43 des Verwirbelungskörpers 79 eingeleitet wird. Die schrägen Zulauftbohrungen 81 bewirken eine zusätzliche Verwirbelung.

Oberhalb des Verwirbelungselements 79 ist eine Haltevorrichtung angebracht, die sich nach innen erstreckende (spiralförmige) Haltearme 49 aufweist. Die Haltearme 49 sind aus einem elastisch verformbaren und federnden Material, beispielsweise Kunststoff, Glasfaser oder ähnlichen Materialien, hergestellt . Die Haltearme 49 dienen zur Aufnahme und Halterung einer Zahnreinigungsmischung (z. B. in Form einer Tablette 21 oder in eine Aufnahmestruktur 31).

Oberhalb der Zahnreinigungsmischung ist eine Gitter- oder Siebstruktur 87 vorgesehen, gegen die die Zahnreinigungsmischung mittels der Haltearme 49 gedrängt wird.

Im Oberteil 41 ist ein Auslass 61 ausgebildet, durch den Reinigungssuspension aus der Ausspülkammer über eine Flüssigkeitsableitung 9 nach außen abgeleitet werden kann.

In zusammengesetztem Zustand ist das Verwirbelungselement bzw. der Wirbelkörper 79 innerhalb des Unterteils 43 angeordnet. Die Haltevorrichtung ist entweder auf oder innerhalb des Verwirbelelements 79 aufgesetzt oder angeordnet. Die Haltearme 49 drücken im zusammengesetzten Zustand die Zahnreinigungsmischung gegen die Siebstruktur 87, stellen also die elatisch vorgespannte Halterung für eine Zahnreinigungsmischung bereit. Diese kann durch eine elastische Ausgestaltung die Siebstruktur 87 unterstützt werden.

In Betrieb strömt in die Ausspülvorrichtung 7 eingeleitete Flüssigkeit über einen Einlass 63 im Unterteil 43 in die Ausspülkammer und wird dort in Drehung und Verwirbelung gesetzt. Dann strömt die Flüssigkeit durch die Durchgangsbohrung 81 in die Wirbelkammer 83 innerhalb des Verwirbelungskörpers 79. Von dort strömt die verwirbelte Flüssigkeit durch die Haltearme 49 und umströmt bzw. umspült die Zahnreinigungsmischung. Dabei wird die Zahnreinigungsmischung 21 ausgespült und gelöste Partikel, insbesondere abrasive Bestandteile werden von dem Flüssigkeitsstrom durch die Siebstruktur 87 hindurch geführt, und danach über den Flüssigkeitsauslass 61 abgeleitet.

Die Siebstruktur 87 kann dabei fest innerhalb des Oberteils integriert sein oder aber auch alternativ aus dem Oberteil entfernbar ausgestaltet sein.

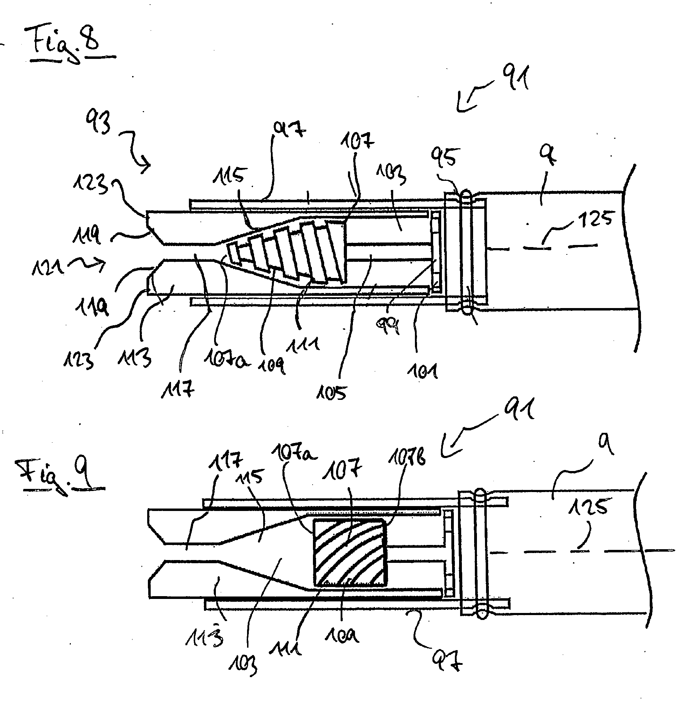

**Fig. 8** zeigt eine Querschnittsansicht einer Düse 91 zur Abstrahlung von Zahnreinigungssuspension. Die Düse 91 ist an einem ihrer Enden mit einer Flüssigkeitszuleitung 9 mittels eines Befestigungselement 95 verbunden. Das Befestigungselement 95 kann als Befestigungsring oder Schelle ausgestaltet werden, die die Flüssigkeitsleitung 9 gegen die Düse 91 drängt.

Die Düse 91 umfasst eine Düseneinheit 93, die in einer Hülse 97 untergebracht ist. Die Hülse 97 und die Düseneinheit 93 sind miteinander verbunden, beispielsweise verklebt, verschweißt etc. Alternativ können diese auch einstückig ausgebildet sein.

An dem der Flüssigkeitszuleitung 9 zugewandten Ende der Düseneinheit 93 ist ein Filterelement 99 angeordnet. Das Filterelement 99 umfasst Durchlässe beispielsweise Bohrungen oder Schlitze 101. In Strömungsrichtung nach dem Filterelement 99 liegt eine Druckkammer 103. Innerhalb der Druckkammer 103 erstreckt sich in Richtung der Düsenlängsachse 125 ein Befestigungselement 105, das mit dem Filter 99 verbunden oder einstückig daran ausgebildet ist. Am gegenüberliegenden Ende des Befestigungselements 105 ist ein Drallmittel in Form eines Drallkörpers 107 angeordnet.

Der Drallkörper 107 läuft in Strömungsrichtung konisch zu. In der Oberfläche des Drallkörpers 107 sind gewindeartig bzw. spiralförmig ausgebildete Ausnehmungen 109 zwischen Erhöhungen 111 ausgebildet. Die Ausnehmungen 109 und Erhöhungen 111 verdrallen die Strömung in die Düse 91.

Bei Flüssigkeitseinleitung fließt die Flüssigkeit durch die Druckkammer 103 und stößt auf die ebene Endfläche 107b des Drallkörpers 107. Dabei wird die Flüssigkeit umgelenkt und umströmt die Randbereiche des Drallkörpers 107.

Die Düseneinheit 93 weist Gehäuse 113 auf. Das Gehäuse 113 umfasst einen im Wesentlichen gleichförmigen ("linearen") Bereich, der die Druckkammer 103 begrenzt und einen Teil des Drallkörpers 107 umfasst. Stromabwärts davon verjüngt sich das Gehäuse 113 bis zum einen Austrittskanal 117. Zwischen dem Drallkörper 107 und den sich verjüngenden Gehäusewänden 115 wird so eine Verdichtungszone gebildet.

Im Anschluss an die Verjüngungen 115 verläuft der Austrittskanal 117 in Richtung zu einem Düsenmund 121. Danach weitet sich der Düsenmund bzw. die Austrittsöffnung trichterartig nach außen auf. Die Steigung der Neigung kann dabei 45° zur Düsenlängsachse 125 betragen. Somit ist der Düsenmund nach Art eines Austritttrichters gebildet. Im Anschluss an die Trichterflächen 119 verläuft der Düsenmund 121 wieder abgeflacht, in etwa in einem 90° Winkel zur Düsenlängsachse 125 an Flächen 123.

Drallkörper 107 umströmende Flüssigkeit bzw. Suspension wird verdrallt und beschleunigt, wobei auch der Flüssigkeitsdruck erhöht wird. Der Kanal 117 dient einer weiteren Drucksteigerung und Verwirbelung des Flüssigkeitsstroms. Dabei lassen sich Flüssigkeits-Drücke von etwa 4 bis 11 bar realisieren. Die trichterförmige Aufweitung 119 ermöglicht einen hohlkegelartig austretenden Flüssigkeitsstrom, wobei über die Aufweitung der Flüssigkeitsdruck reduziert wird. Die Abflachungen 123 unterstützen einen konzentrisch zur Düsenachse 125 verlaufenden Flüssigkeitsstrahl.

Fig. 9 zeigt eine weitere Ausführungsform einer Düse 91. Diese Variante gleicht im Wesentlichen der Ausführungsform aus Fig. 8. Als Drallmittel ist hier eine im Wesentlichen zylinderförmiger Drallkörper 107 vorgesehen.

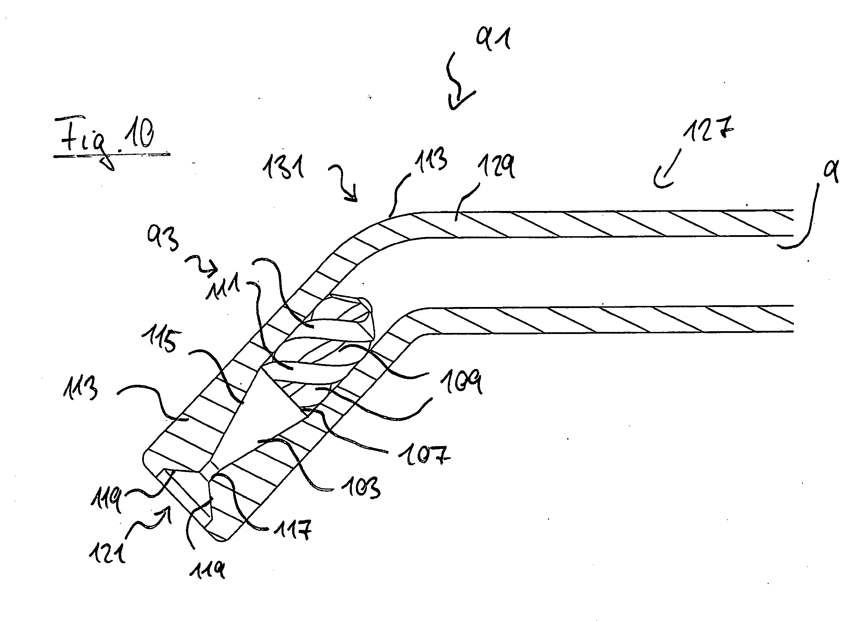

Fig. 10 zeigt eine perspektivische Ansicht einer weiteren Ausführungsform einer Düse 91. Innerhalb eines Düsengehäuses 113 ist eine Flüssigkeitsleitung 9 angeordnet, die mit einer Düseneinheit 93 gekoppelt ist.

Das einer Düsenöffnung bzw. einem Düsenmund 121 zugeordnete Ende der Düseneinheit 93 weist in etwa in einem Drittel der Gesamtdüsenlänge eine gerundete Abbiegung bzw. Abwinkelung 131 auf. Die Abwinkelung 131 kann in etwa 45°- 60° zur Düsenlängsachse 125 betragen. Dies bewirkt eine günstige Positionierung des Düsenmundes 121, die eine ergonomischere Handhabung bei der Zahnreinigung erlaubt. Die Biegung 131 beeinträchtigt das Abstrahlverhalten gegenüber einer geraden Düse nur unwesentlich. Im oralen Bereich lassen sich so gut auch schwer zugängliche Zahnbereiche erreichen. Darüber hinaus bewirkt die Biegung 131 eine tangentiale Zuführung des Flüssigkeitsstroms zu einem Drallkörper 107. Dies bewirkt eine zusätzliche Rotation des Flüssigkeitsstroms.

Der in einem zylindrisch ausgebildeten Abschnitt angeordnete Drallkörper 107 verringert das Volumen des zylindrischen Abschnitts eines Düsenlumens, so dass sich der Druck der Flüssigkeit erhöht. Der Drallkörper 107 ist an seinem Ende trichterförmig ausgebildet sein, um den Flüssigkeitsstrom zu beschleunigen. Die in einer Suspension vorhandenen abrasiven Partikel erlangen so eine zusätzliche kinetische Energie und Beschleunigung. Die Eigenvibrationen bzw. Schwingungen des Düsenkörpers 91 verhindern eine Ablagerung von abrasiven und nicht wasserlöslichen Materialien und Partikeln aus der Suspension und somit insbesondere eine Verklumpung und Ablagerung aufgrund von Bildung von Neerströmen und Tot-Zonen. Insbesondere bei der Verwendung von PMMA und Hart-PVC treten üblicherweise keine Verstopfungen der Düse 91 auf.

Auch der Drallkörper 107 weist Ausnehmungen 109 und Erhöhungen 111 auf, die hier als Züge und Felder ausgeführt sind und jeweils um 120° versetzt sind und symmetrisch aufgeteilt sind. Nach Umströmen bzw. Passieren des Drallkörpers 107 tritt ein Flüssigkeitsstrom in die trichterförmig zulaufende Druckkammer 103 ein. Die trichterförmige Druckkammer 103 mündet an ihrem Ausgang in einen linearen Düsenausgangskanal 117 von geringem Durchmesser. Der Durchmesser kann beispielsweise 0,6 mm betragen. Die Düsenöffnung bzw. der Düsenmund 121 umfasst wieder einen gegenseitig ausgerichteten Austrittstrichter, der über trichterförmige Aufweitungsflächen 119 aufgeweitet ist.

Der Flüssigkeitsstrom wird in etwa mit einem Eingangsdruck von 4 bis 10 bar in die Flüssigkeitsleitung eingeleitet und entspricht in etwa dem Primärdruck vor der Düse.

Die Düse 91 lässt sich als Hohlkegeldüse ausbilden. Eine solche Ausführung ist besonders verstopfungsunempfindlich. Zusätzlich bewirkt diese Ausgestaltung eine hohe Dynamik des Flüssigkeitsstroms. Eine Hohlkegeldüse reduziert den Wasserverbrauch im Vergleich zu Vollkegeln oder Vollstrahldüsen. Auch wird der Flüssigkeitsstrahl in den Randbereichen des Hohlkegels verstärkt, und somit die Reinigungswirkung im Vergleich zu einem gebündelten Flüssigkeitsstrom erhöht.

Nachfolgend werden weitere Aspekte der Erfindung dargestellt die teilweise keine bevorzugten Ausführungsformen darstellen.

Um Reinigungstabletten vollständig aufzulösen, wird ferner eine Ausspülkammer vorgeschlagen, in der die Tablette in einem rotierenden Wirbel des Mediums allseitig umspült ist.

Für Reinigungsgeräte, aber auch für Zusätze in Bewässerungssystemen und Desinfektionsgeräten, werden zunehmend die Wasser- oder anderen Medien zuzusetzenden Bestandteile in Tablettenform angefertigt und in eine Ausspülkammer eingelegt, in der sie von hindurch geleitetem Wasser aufgelöst werden sollen.

Dies gelingt jedoch nur bei Einsatz entsprechend großer Wassermengen vollständig. Weil die im Medium fort getragene Stoffmenge bei zunehmender Verkleinerung der Tablette abnimmt und bei folglich nachlassender Wirkung die Reinigung oft abgebrochen wird, verbleibt dann ein Rest der Tablette in der Ausspülkammer und ist später schwer zu entfernen.

Ursache hierfür ist - neben der zwangsläufigen Verkleinerung der abtragbaren Flächen der Tablette - dass sich in der Ausspülkammer verändernde turbulente Zonen entwickeln und sich dabei zwangsläufig Tot-Zonen bilden, die nicht mehr durchströmt werden, und wo sich das Material an Wänden und in Ecken absetzt. Dies führt zur Erfordernis regelmäßiger Reinigung der Mischklammer oder dem Durchfluss größerer Wassermengen, auch wenn diese sonst nicht benötigt werden. Dies betrifft in erhöhtem Maße Reinigungsmittel mit abrasiven Bestandteilen, die in der Regel wasserunlöslich sind und daher dazu neigen, sich in Tot-Zonen abzusetzen. Kritisch ist dies insbesondere bei Anwendungen, bei denen die Mittel zudem durch enge Düsen gepresst werden müssen, um einen angemessenen Reinigungseffekt zu erzielen, weil dabei nur vergleichsweise geringe Durchflussmengen bewegt werden.

Für eine Anwendung in der Zahnreinigung mit Beseitigung von Plaques hat es eine größere Zahl von Vorschlägen mit Abtrag durch im Wasserstrahl geführte Reinigungsmittel, auch für solche mit abrasiven Medien, gegeben:
Die Mehrzahl der vorgeschlagenen Lösungen bezieht sich dabei auf die Anwendung von Druckluft, mit der entweder pulverförmige Strahlmittel unmittelbar auf die Zähne geblasen werden, oder gegen die Staubentwicklung mit einem Wasserstrahl umhüllt oder gemischt werden, oder ein Reinigungsmittel aus einem Gemisch von Medium und eigentlichem Strahlmittel mit Druckluft aufgebracht wird.

Dies ist für Zahnarztpraxen naheliegend, weil dort Druckluft zum Betrieb von Bohrern und Ausblasgeräten regelmäßig vorhanden ist. Für die tägliche Zahnreinigung zur Beseitigung von Biofilmen und Plaques wäre der Aufwand dafür aber unverhältnismäßig hoch.

Dennoch ist es erstrebenswert, Biofilme und Ablagerungen, die mit der Zahnbürste nur grob zu entfernen sind, mit sanft abrasiven Mitteln möglichst täglich abzutragen. Denn dies ist schonender, als mit der Bürstenreinigung und schafft auf Grund der glatten Zahnoberfächen auch ein angenehmeres, hygienischer wirkendes Gefühl bei der Berührung mit der Zunge.

Die Erfindung soll ein Zahnreinigungssystem mit einer Ausspülkammer für Reinigungstabletten bereitstellen, die bekannte Nachteile wie Ablagerungen, Verstopfungen etc. verhindert und eine vollständige Auflösung einer Reinigungsmischung gewährleistet.

Die Tablette soll stets allseitig umspült werden, auch wenn sie sich durch den Abtrag der Außenschichten verkleinert, ohne dass sie bis zur Endphase zerbricht.

Dies wird zunächst durch eine Ausspülkammer erreicht, die eine allseitige Umspülung der Tablette unterstützt. Dazu wird der zulaufende Strom des Mediums zunächst durch eine Wirbelkammer in Turbulenz versetzt.

Ein gleichmäßiger Abtrag wird dadurch erreicht, dass die Tablette vor einem abdeckenden Sieb auf einem fingerartigen, leicht spiralförmig orientierten, elastischen Kunststoff-Halter aufliegt. Beim Einlegen der Tablette wird sie in diesen leicht eingedrückt und von den Spiral-förmigen Fingern auch bei zunehmender Verkleinerung locker gegen das Sieb geführt. Durch die wirbelnde Umströmung, wie auch die Ausgasung des Sprengmittels gerät die Tablette in Vibration und rotiert auf den spiralförmigen Fingern, so dass die gesamte Oberfläche umlaufend benetzt wird. Damit ist gesichert, dass ein verstetigter und auch bei definierter Wassermenge vollständiger Abtrag der Bestandteile der Tablette erfolgt.

Bei einem möglichen Aufbau des Systems kann der Wasser- oder Medienstrahl durch einen unteren Stutzen in eine Zulaufkammer der Ausspülkammer eintreten und wird dort von einem Verwirbelungseinsatz mit dem Durchtritt von außen durch Schrägbohrungen in die Wirbelkammer eingeleitet, auf deren fingerförmigem Aufnahmen die Reinigungstablette aufgelegt ist. Das somit sie allseitig umströmende Medium löst die Tablette entsprechend an bzw. auf und tritt durch das die Wirbelkammer abschließende Sieb in eine Transferkammer und von dort in einen Auslassstutzen ein.

Bei einer Ausspülkammer kann für die gleichmäßige Auflösung von Reinigungstabletten mit abrasiven und im zu zumischendem Medium nicht oder sehr schwer auflösbaren Bestandteilen, das in die Ausspülkammer eintretende Medium durch einen vorgeschalteten Turbolator in turbulent-drehende Bewegung versetzt werden.

Bei einer Ausspülkammer kann für die gleichmäßige Auflösung von Reinigungstabletten der Turbolator aus einem Zylinder bestehen, der das zugeförderte Medium durch segmentierende Bohrungen in der Zylinderwand in eine rotierende Bewegung versetzt.

Bei einer Ausspülkammer können für die gleichmäßige Auflösung von Reinigungstabletten die Bohrungen im Turbolator horizontal und vertikal im 45°-Winkel zur Zylinderachse verlaufen.

Bei einer Ausspülkammer kann für die gleichmäßige Auflösung von Reinigungstabletten die Tablette auf einem Halter aus spiralförmig angeordneten, elastischen Kunststofffingern aufliegen.

Bei einer Ausspülkammer für die gleichmäßige Auflösung von Reinigungstabletten kann der Austritt der Ausspülkammer durch einen als Filter wirkendes Sieb abgeschlossen sein.

Bei einer Ausspülkammer kann für die gleichmäßige Auflösung von Reinigungstabletten der Druck des in die Ausspülkammer einströmenden Mediums zwischen 4 und 10 Bar betragen.

Um Verstopfungen durch abrasive Partikel zu verhindern, weist eine Düse zur Abstrahlung von flüssigen Reinigungsmitteln mit darin dispergierten abrasiven Partikeln definierte Flexibilität auf, um sich im mikroskopischen Maßstab so zu verformen, dass die Eigenvibration beim Durchtritt des Mediums mit hohem Pressdruck die Anlagerung von Partikel an ihren Rändern verhindert, bzw. kurzfristig Angelagerte wieder ablöst.

Weiter kann die Düse vor der Verengung einen Turbolator enthalten, der das Medium zirkular verwirbelt, dagegen aber glatte Wände an der Kompressionskammer und im Düsengang, sowie eine zirkulare Erweiterung von 45° am Austritt.

Bisherige Düsenkonstruktionen von Abstrahlgeräten werden in der Regel aus möglichst hartem Material hergestellt, um ihren Verschleiß zu verringern. Bekannte Ansätze sind kostenintensiv, haben oftmals einen komplizierten Aufbau und verhindern nicht ausreichend Ablagerungen und Verstopfungen.

Eine weitere Einflussgröße hinsichtlich möglicher Verstopfungen ist die Düsen-Geometrie. Während einerseits offensichtlich ist, dass Tot-Volumen zu vermeiden sind, in denen sich Ablagerungen vollziehen und mangels ausreichend strömenden Mediums kaum mehr abgelöst werden, ist jedoch die durch Turbulenzen in der Verengung eines Strahlganges bewirkten unterschiedlichen Druckzonen und Neerströme bislang nur unvollständig erforscht und auch nur unzureichend in Simulationen darstellbar.

Andererseits sind gerade diese für die Anlagerung von Strahlmitteln an den Wandungen von Leitungen und Düsen entscheidend.

Düsen sind in kostengünstiger Weise so auszuführen, dass sie Verstopfungen vermeiden, auch wenn ihr Durchmesser nur wenig größer ist als die Korngröße der festen Bestandteile des Mediums.

Das Material der Düse muss eine gewisse Flexibilität aufweisen und sich daher im mikroskopischen Maßstab verformen können, um durch die Eigenvibration beim Durchtritt von Wasser mit entsprechendem Pressdruck die Anlagerung von Partikel an ihren Wandungen zu verhindern, bzw. kurzzeitig Angelagerte wieder abzulösen.

Daneben zeigte sich bei den entsprechenden Versuchen auch, dass sich auch der Verschleiß der Düsen unter Umständen verringert, wenn sie aus teilweise flexiblem Material bestehen.

Beides beruht offensichtlich darauf, dass Turbulenzen des durch die Düse gepressten Strahls des Mediums, kombiniert mit eventuellen periodischen Unregelmäßigkeiten des Primärdrucks, zu Resonanzerscheinungen führen, die Vibrationen der Düse und jene wiederum die Ablösung möglicher Anlagerungen auslösen, bzw. diese verhindern.

Es erübrigen sich daher die teuren herkömmlichen Materialien und aufwändigen Bearbeitungsmethoden, wenn die Düsen z.B. aus dem Kunststoff PMMA hergestellt sind. Zudem können diese leicht auswechselbar ausgeführt - und auf Grund der geringen Kosten - gegebenenfalls auch ausgewechselt werden.

Dabei erwiesen sich Düsen für in Wasser dispergierte, abrasive Inhaltsstoffe wie oben beschrieben bei einem Primärdruck von 5 bis 9 bar als vorteilhaft, bei denen die Funktionsbereiche Wirbelbildung und Strahlführung so ausgeführt sind, dass das Medium zunächst verwirbelt, dann in der Verdichtung und Strahlführung jedoch an möglichst glatten Wänden geführt wird.

Dabei ist eine drehende Verwirbelung vorteilhaft, die unmittelbar vor der Verdichtungszone einsetzt und eine dann glatte Strahlführung bis zum Düsenaustritt, der wiederum in einem 45°-Winkel zirkular zur Achse im Bereich einer Materialstärke von wenigstens 0,5 mm erfolgen soll.

Ein Zuleitungsschlauch zur Düseneinheit lässt die in einer Hülse gefasst ist, das Medium durch Bohrungen oder Schlitze in einer Filterplatte in eine Druckkammer eintreten, wo ein von einem Stempel gehaltene, konische Drallkörper von einem analog konischen Gehäuse umschlossen ist und das Medium in drehender Verwirbelung in eine eigentliche Düse presst. Speziell für die Zahnreinigung mit Abrasivstoffen wird der Strahl am Düsenmund wieder aufgeweitet.

Alternativ kann der Drallkörper zylindrisch ausgebildet sein und umfasst bohrerartige Ausfräsungen für eine drehende Verwirbelung des Mediums, das mit den Abrasivstoffen in die Druckkammer eintritt, die in die Düseneinheit übergeht.

Bei der Düse kann zum Abstrahlen von Medien mit vorher eingemischten abrasiven Inhaltsstoffen bei Eingangsdrücken von 4 bis 10 bar die Düse aus halbstarren Kunststoffen, wie Polymethylmetarylat (PMMA) oder hart-PVC, bestehen.

## Patentansprüche

1. Zahnreinigungssystem (1) umfassend:
eine Flüssigkeitszuleitung (5), über die Flüssigkeit zu dem Bedienelement (11) leitbar ist;
eine mit einer Flüssigkeitsquelle (3) verbindbare Ausspülvorrichtung (7) zur Aufnahme einer Zahnreinigungsmischung (21) und zur Ausspülung von Bestandteilen der Zahnreinigungsmischung (21) mittels von der Flüssigkeitsquelle (3) zugeführter Flüssigkeit und Vermischung ausgespülter Bestandteile und Flüssigkeit,
eine mit der Ausspülvorrichtung (7) in Fluidverbindung stehende Düse (91) zur Abgabe der Mischung ausgespülter Bestandteile der Zahnreinigungsmischung (21) und Flüssigkeit zur Zahnreinigung,
wobei die Ausspülvorrichtung (7) umfasst.
- ein Gehäuse (41),
- eine Ausspülkammer (42) in dem Gehäuse (41),
- einen Flüssigkeitseinlass (63) in die Ausspülkammer (42),
- einen Flüssigkeitsauslass (61) aus der Ausspülkammer (42),
- eine in der Ausspülkammer (42) angeordnete Haltevorrichtung für eine Zahnreinigungsmischung (21),
**dadurch gekennzeichnet, dass**
die Haltevorrichtung wenigstens teilweise elastisch ist, um eine Vorspannkraft auf die Zahnreinigungsmischung (21) auszuüben.

2. Zahnreinigungssystem (1) gemäß Anspruch 1, bei dem die Haltvorrichtung wenigstens zwei elastische Finger (69, 71) umfasst, die die Zahnreinigungsmischung (21) elastisch vorgespannt zu halten vermögen.

3. Zahnreinigungssystem (1) gemäß Anspruch 1 oder 2, bei dem in der Ausspülvorrichtung (7) die Zahnreinigungsmischung (21) in einer Aufnahmestruktur (31) für die Zahnreinigungsmischung (21) mit einen Aufnahmeraum zur Aufnahme der Zahnreinigungsmischung (21) und wenigstens einer Einlassöffnung (37) zur Zufuhr von Flüssigkeiten in den Aufnahmeraum und wenigstens eine Auslassöffnung (37) zur Ausfuhr von Flüssigkeit aufgenommen ist und die Haltevorrichtung die Aufnahmestruktur (31) in der Ausspülkammer (42) elastisch hält.

4. Zahnreinigungssystem (1) gemäß einem der Ansprüche 1 bis 3, bei dem die Ausspülvorrichtung (7) für einen Druck von einströmender Flüssigkeit zwischen 4 bar und 10 bar ausgelegt ist.

5. Zahnreinigungssystem (1) gemäß einem der Ansprüche 1 bis 4, bei dem die Ausspülvorrichtung (7) ein Verwirbelungselement (107) zur Verwirbelung von in die Ausspülvorrichtung (7) eingeleiteter Flüssigkeit umfasst.

6. Zahnreinigungssystem (1) gemäß einem der Ansprüche 1 bis 5, mit einem Bedienelement (11), wobei die Ausspülvorrichtung (7) in oder an dem Bedienelement (11) angeordnet oder mit diesem koppelbar ist.

7. Zahnreinigungssystem (1) gemäß einem der Ansprüche 1 bis 6, das eine Flüssigkeitsquelle (3) umfasst, oder mit einer separaten Flüssigkeitsquelle verbunden ist.

## Claims

1. A tooth cleaning system (1) comprising
a supply pipe for liquid (5) through which liquid can be fed to a handling element (11);
a leaching device (7) connectable to a liquid source (3) for receiving a tooth cleaning mixture (21) and for leaching out components out of the tooth cleaning mixture (21) by means of liquid supplied by the liquid source (3) and for mixing leached out components and the liquid,
a nozzle (91) in fluid communication with the leaching device (7) to emit the mixture of leached out components of the tooth cleaning mixture (21) and liquid for tooth cleaning,
the leaching device (7) comprising:
- a housing (41),
- a leaching chamber (42) within the housing (41),
- a liquid inlet (63) into the leaching chamber (42),
- a liquid outlet (61) out of the leaching chamber (42),
- a support for a tooth cleaning mixture (21) arranged in the leaching chamber (42),
**characterized in that**
the support being at least partly elastic for providing a prestress to the tooth cleaning mixture (21).

2. A tooth cleaning system (1) according to claim 1, wherein the support comprises at least two elastic fingers (69, 71) which are capable of holding the tooth cleaning mixture (21) under an elastic prestress.

3. A tooth cleaning system (1) according to claim 1 or 2, wherein inside of the leaching device (7) the tooth cleaning mixture (21) is received in a receiving structure (31) for the tooth cleaning mixture (21) with a receiving volume for receiving the tooth cleaning mixture (21) and at least one inlet aperture (37) for feeding liquid into the receiving volume and at least one outlet aperture (37) for discharging liquid and wherein the support is holding the receiving structure (31) in the leaching chamber (42) elastically.

4. A tooth cleaning system (1) according to any of claims 1 - 3, wherein the leaching device (7) is designed for a pressure of the inflowing liquid between 4 bar and 10 bar.

5. A tooth cleaning system (1) according to any of claims 1 - 4, wherein the leaching device (7) comprises a swirl element (107) for causing swirling of liquid fed into the leaching device (7).

6. A tooth cleaning system (1) according to any of claims 1 - 5 comprising a handling element (11), wherein the leaching device (7) is arranged in or at the handling element (11) or can be coupled to it.

7. A tooth cleaning system (1) according to any of claims 1 - 6, comprising a liquid source (3) or which is connected to a separate liquid source.

## Revendications

1. Système (1) de nettoyage des dents, comprenant :
une conduite d'amenée de liquide (5) par laquelle du liquide peut être conduit vers l'élément d'utilisation (11) ;
un dispositif de rinçage (7) pouvant être relié à une source de liquide (3), prévu pour recevoir un mélange (21) de nettoyage des dents et pour rincer les constituants du mélange (21) de nettoyage des dents au moyen du liquide fourni par la source de liquide (3) et mélanger les constituants rincés et le liquide,
une buse (91) en liaison fluidique avec le dispositif de rinçage (7) pour délivrer le mélange de constituants du mélange (21) de nettoyage des dents rincés et de liquide pour nettoyer les dents,
le dispositif de rinçage (7) comprenant :
- un boîtier (41),
- une chambre de rinçage (42) dans le boîtier (41),
- une entrée de liquide (63) dans la chambre de rinçage (42),
- une sortie de liquide (61) de la chambre de rinçage (42),
- un dispositif de retenue pour un mélange (21) de nettoyage des dents disposé dans la chambre de rinçage (42),
**caractérisé en ce que**
le dispositif de retenue est au moins partiellement élastique pour exercer une force de précontrainte sur le mélange (21) de nettoyage des dents.

2. Système (1) de nettoyage des dents selon la revendication 1, dans lequel le dispositif de retenue comprend au moins deux doigts élastiques (69, 71) qui sont aptes à maintenir le mélange (21) de nettoyage des dents sous précontrainte élastique.

3. Système (1) de nettoyage des dents selon la revendication 1 ou 2, dans lequel le mélange (21) de nettoyage des dents est reçu dans le dispositif de rinçage (7) par une structure de réception (31) pour le mélange (21) de nettoyage des dents, avec une chambre de réception du mélange (21) de nettoyage des dents et au moins une ouverture d'entrée (37) pour l'amenée de liquide dans la chambre de réception et au moins une ouverture de sortie (37) pour l'évacuation du liquide, et le dispositif de retenue maintient élastiquement la structure de réception (31) dans la chambre de rinçage (42).

4. Système (1) de nettoyage des dents selon l'une des revendications 1 à 3, dans lequel le dispositif de rinçage (7) est conçu pour une pression de liquide entrant comprise entre 4 bars et 10 bars.

5. Système (1) de nettoyage des dents selon l'une des revendications 1 à 4, dans lequel le dispositif de rinçage (7) comprend un élément de tourbillonnement (107) pour faire tourbillonner le liquide introduit dans le dispositif de rinçage (7).

6. Système (1) de nettoyage des dents selon l'une des revendications 1 à 5, avec un élément d'utilisation (11), le dispositif de rinçage (7) étant disposé dans ou sur l'élément d'utilisation (11) ou pouvant être couplé à celui-ci.

7. Système (1) de nettoyage des dents selon l'une des revendications 1 à 6, comprenant une source de liquide (3) ou étant relié à une source de liquide séparée.
